# EUROPÄISCHE PATENTANMELDUNG

(11) **EP 2 228 161 A1**
(43) Veröffentlichungstag der Anmeldung: **15.09.2010**
(21) Anmeldenummer: 09003694.8
(22) Anmeldetag: 13.03.2009
(51) Int. Cl.: B23C 5/16, B23B 27/14

(54) **Schneidteil und Schneidplatte für ein Zerspanungswerkzeug**

(71) Anmelder: Siemens Aktiengesellschaft, 80333 München (DE)
(72) Erfinder: Moll, Amir, 10115 Berlin (DE)

(57) **Zusammenfassung**

Die Erfindung betrifft ein Schneidteil (20, 54), das zumindest eine geometrisch bestimmte Schneide eines Zerspanungswerkzeugs (50) zum Zerspanen eines Werkstücks definiert, wobei das Schneidteil (20, 54) aus einem einkristallinen metallischen oder keramischen Schneidstoff besteht.

## Beschreibung

Die Erfindung betrifft ein Schneidteil, das zumindest eine geometrisch bestimmte Schneide eines Zerspanungswerkzeugs zum Zerspanen eines Werkstückes definiert. Ferner bezieht sich die Erfindung auf eine Schneidplatte für ein Zerspanungswerkzeug sowie auf ein Zerspanungswerkzeug als solches.

Zerspanungswerkzeuge mit geometrisch bestimmter Schneide sind im Stand der Technik in unterschiedlichen Ausgestaltungen bekannt, beispielsweise in Form eines Fräswerkzeugs, Drehwerkzeugs oder Bohrwerkzeugs. Die Schneiden solcher Zerspanungswerkzeuge können einteilig mit dem Werkzeug ausgebildet sein, wie es beispielsweise bei Fräs-, Dreh- und Bohrwerkzeugen aus Werkzeugstahl oder Schnellarbeitsstahl normalerweise der Fall ist. Alternativ können an dem Zerspanungswerkzeug aber auch die Schneiden definierende Schneidteile unlösbar befestigt werden. So sind beispielsweise Zerspanungswerkzeuge aus Hartmetall bekannt, an denen Schneidteile aus polykristallinem Diamanten oder dergleichen festgelegt sind. Eine weitere Möglichkeit besteht darin, Schneiden definierende Schneidteile an sogenannten Schneidplatten festzulegen, die dann lösbar und somit austauschbar an Zerspanungswerkzeugen befestigt werden können. Beispielsweise ist es bekannt, Schneidteile aus polykritallinem konischem Bornitrid auf Hartmetallschneidplatten aufzusintern. Noch eine weitere Alternative besteht darin, einteilig ausgebildete und Schneiden definierende Schneidplatten zu verwenden, die lösbar an Zerspanungswerkzeugen befestigt werden können. Derartige Schneidplatten sind meist aus einer Schneidkeramik hergestellt, wie beispielsweise eine Aluminiumoxidkeramik.

In Abhängigkeit von ihrem Verwendungszweck können Schneidteile und Schneidplatten der oben genannten Art verschiedene Geometrien und Schneidstoffe aufweisen. Als Schneidstoffe kommen insbesondere Hartmetalllegierungen sowie superharte Schneidstoffe zum Einsatz, wie beispielsweise polykristalliner Diamant, polykristallines kubisches Bornitrid, Cermet und Keramik, um nur einige zu nennen.

Zur Erhöhung der Standzeit der Schneidteile bzw. Schneidplatten insbesondere bei der Bearbeitung schwer zerspanbarer Werkstoffe ist es bekannt, die Korngröße polykristalliner Schneidstoffstrukturen zu verringern, was auch als Kornverfeinerung bezeichnet wird. Ein Beispiel hierfür sind Schneidstoffe aus Feinstkornhartmetall auf der Basis von Wolframcarbid und Kobalt, bei denen die Korngröße im Bereich von 0,2 bis 1 µm liegt. Derartige Feinstkornhart metallschneidstoffe zeichnen sich durch eine hohe Härte und Biegefestigkeit aus, was den Schneidstoff insbesondere für dynamisch beanspruchende Spanarbeiten geeignet macht, wie sie bei Schnittunterbrechungen auftreten. Auch sind Werkstoffe aus gehärtetem Stahl mit solchen Schneidstoffen gut zu bearbeiten.

Ein Problem bei Schneidteilen oder Schneidplatten aus polykristallinen Schneidstoffstrukturen besteht allgemein dahingehend, dass diese normalerweise entlang der Korngrenzen brechen. Mit einer Kornverfeinerung geht automatisch eine Erhöhung der Korngrenzen einher, was diese noch anfälliger in Bezug auf Brüche entlang der Korngrenzen macht.

Der vorliegenden Erfindung liegt daher die Aufgabe zugrunde, ein Schneidteil, eine Schneidplatte sowie ein Zerspanungswerkzeug der eingangs genannten Art anzugeben, bei denen Brüche entlang der Korngrenzen der Schneidstoffstruktur verhindert werden und mit denen lange Standzeiten erzielbar sind.

Zur Lösung dieser Aufgabe schafft die vorliegende Erfindung ein Schneidteil der eingangs genannten Art, das dadurch gekennzeichnet ist, dass dieses aus einem einkristallinen metallischen oder keramischen Schneidstoff besteht, insbesondere aus einer einkristallinen Superlegierung oder aus einer einkristallinen Oxidkeramik. Durch Brüche entlang von Korngrenzen verursachte Standzeitverringerungen sind bei dem erfindungsgemäßen Schneidteil entsprechend nicht zu befürchten, da aufgrund der einkristallinen Schneidstoffstruktur keine Korngrenzen vorhanden sind.

Ferner schafft die vorliegende Erfindung eine Schneid-platte, die wenigstens ein Schneidteil der zuvor genannten Art aufweist. Eine solche mit Schneidteilen versehene Schneidplatte hat gegenüber Schneidteilen, die fest mit einem Zerspanungswerkzeug verbunden sind, den Vorteil, dass sie mit entsprechenden Befestigungsmitteln in Form von Klemmeinrichtungen oder dergleichen lösbar und somit austauschbar an Zerspanungswerkzeugen befestigt werden können.

Bevorzugt weist die Schneidplatte wenigstens eine Aussparung zur Aufnahme des zumindest einen Schneidteils auf, so dass die Schneidteile in die Schneidplatte integriert werden können.

Zudem schafft die vorliegende Erfindung eine Schneidplatte, die zumindest eine geometrisch bestimmte Schneide eines Zerspanungswerkzeugs zum Zerspanen eines Werkstückes definiert und dadurch gekennzeichnet ist, dass die Schneidplatte aus einem einkristallinen metallischen oder keramischen Schneidstoff besteht, insbesondere aus einer einkristallinen Superlegierung oder einer einkristallinen Oxidkeramik. Auch eine solche Schneidplatte hat gegenüber einem fest mit einem Zerspanungswerkzeug verbundenen Schneidteil den Vorteil, dass sie mit entsprechenden Befestigungsmitteln lösbar und somit austauschbar an Zerspanungswerkzeugen festgelegt werden kann.

Die Schneidplatte kann als eine Wendeschneidplatte ausgebildet sein, so dass sie beidseitig verwendet werden kann.

Zudem schafft die vorliegende Erfindung ein Zerspanungswerkzeug mit einem Schneidteil oder einer Schneidplatte der zuvor beschriebenen Art.

Darüber hinaus schafft die vorliegende Erfindung ein Zerspanungswerkzeug mit wenigstens einer geometrisch bestimmten Schneide zum Zerspanen eines Werkstückes, wobei das Zerspanungswerkzeug dadurch gekennzeichnet ist, dass es aus einem einkristallinen metallischen Schneidstoff besteht, insbesondere aus einer einkristallinen Superlegierung. Ein solches Zerspanungswerkzeug ist also insgesamt einteilig ausgebildet.

Ferner schlägt die Erfindung die Verwendung eines einkristallinen metallischen oder keramischen Werkstoffs als Schneidstoff für ein Zerspanungswerkzeug mit geometrisch bestimmter Schneide vor.

Hinsichtlich weiterer vorteilhafter Ausgestaltungen der Erfindung wird auf die Unteransprüche sowie die nachfolgende Beschreibung von Ausführungsbeispielen unter Bezugnahme auf die beiliegende Zeichnung verwiesen. Darin ist
- Figur 1: eine perspektivische Ansicht einer Schneidplatte gemäß einer ersten Ausführungsform der vorliegenden Erfindung,
- Figur 2: eine perspektivische Ansicht einer Wendeschneidplatte gemäß einer zweiten Ausführungsform der vorliegenden Erfindung,
- Figur 3: eine perspektivische Ansicht eines Zerspanungswerkzeugs gemäß einer weiteren Ausführungsform der vorliegenden Erfindung, und
- Figur 4: eine perspektivische Ansicht eines Zerspanungswerkzeugs gemäß einer noch weiteren Ausführungsform der vorliegenden Erfindung.

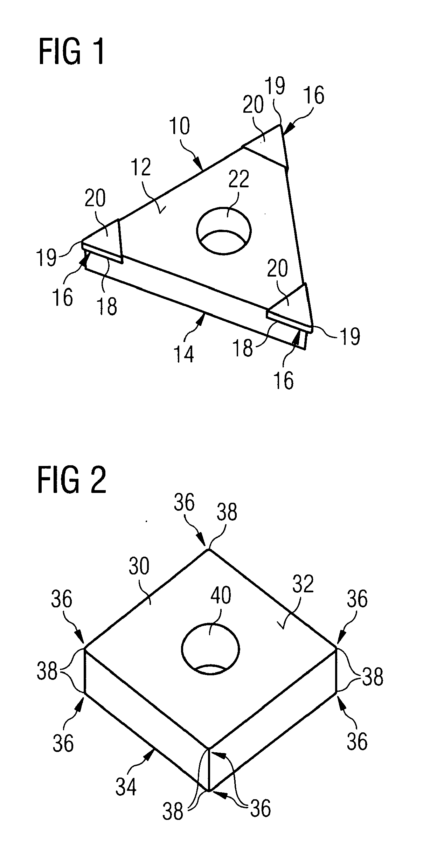

Figur 1 zeigt eine dreieckige Schneidplatte 10 aus Hartmetall gemäß einer ersten Ausführungsform der vorliegenden Erfindung mit einer Oberseite 12 und einer Unterseite 14. Die Schneidplatte 10 ist an ihren Eckbereichen 16 oberseitig jeweils mit einer Aussparung 18 versehen, die ein eine geometrisch bestimmte Schneide 19 definierendes Schneidteil 20 aufnimmt, das fest in der Aussparung 18 fixiert ist. Die Aussparungen 18 und die Schneidteile 20 weisen vorliegend eine dreieckige Form auf, wobei jedoch auch andere Formen denkbar sind. Die Schneidteile 20 bestehen vorliegend jeweils aus einer einkristallinen Superlegierung, also aus einem korngrenzlosen metallischen Schneidstoff. Mittig in der Schneidplatte 10 ist eine Durchgangsöffnung 22 vorgesehen, durch die beim Befestigen der Schneidplatte 10 an einem Zerspanungswerkzeug in bekannter Weise ein Befestigungsmittel greift. Bei dem Zerspanungswerkzeug kann es sich beispielsweise um ein Dreh- oder Fräswerkzeug handeln.

Figur 2 zeigt eine quadratische Wendeschneidplatte 30 gemäß einer zweiten Ausführungsform der vorliegenden Erfindung mit einer Oberseite 32 und einer Unterseite 34. Die Wendeschneidplatte 30 ist einteilig aus einem Schneidstoff hergestellt, bei dem es sich um eine einkristalline Oxidkeramik handelt. Oberseitig und unterseitig definieren die insgesamt acht Eckbereiche 36 jeweils eine geometrisch bestimmte Schneide 38. Mittig umfasst die Wendeschneidplatte 30 eine Durchgangsöffnung 40, durch die beim Befestigen der Wendeschneidplatte 30 an einem Zerspanungswerkzeug in bekannter Weise ein Befestigungsmittel greift. Bei dem Zerspanungswerkzeug kann es sich beispielsweise um ein Dreh- oder Fräswerkzeug handeln.

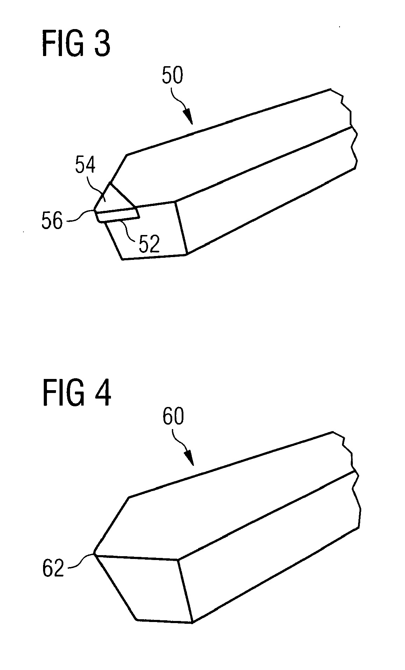

Figur 3 zeigt ein Zerspanungswerkzeug 50 aus Hartmetall gemäß einer weiteren Ausführungsform der vorliegenden Erfindung, bei dem es sich um einen Drehmeißel handelt. An dem vorderen freien Ende des Zerspanungswerkzeugs 50 ist oberseitig eine Aussparung 52 ausgebildet, in der ein Schneidteil 54 fixiert ist. Das Schneidteil 54 definiert eine geometrisch bestimmte Schneide 56 und ist aus einer einkristallinen Oxidkeramik hergestellt.

Figur 4 zeigt ein Zerspanungswerkzeug 60 gemäß einer weiteren Ausführungsform der vorliegenden Erfindung, bei dem es sich ebenfalls um einen Drehmeißel handelt, an dessen vorderen freien Ende eine definierte Schneide 62 ausgebildet ist. Das Zerspanungswerkzeug 60 ist insgesamt aus einer einkristallinen Superlegierung ausgebildet.

## Patentansprüche

1. Schneidteil (20, 54), das zumindest eine geometrisch bestimmte Schneide eines Zerspanungswerkzeugs (50) zum Zerspanen eines Werkstücks definiert,
**dadurch gekennzeichnet, dass**
das Schneidteil (20, 54) aus einem einkristallinen metallischen oder keramischen Schneidstoff besteht.

2. Schneidteil (20, 54) nach Anspruch 1,
**dadurch gekennzeichnet, dass**
der Schneidstoff eine einkristalline Superlegierung ist.

3. Schneidteil (20, 54) nach Anspruch 1,
**dadurch gekennzeichnet, dass**
der Schneidstoff eine einkristalline Oxidkeramik ist.

4. Schneidplatte (10),
**dadurch gekennzeichnet, dass**
diese wenigstens ein Schneidteil (20) nach einem der vorhergehenden Ansprüche aufweist.

5. Schneidplatte (10) nach Anspruch 4,
**dadurch gekennzeichnet, dass**
diese wenigstens eine Aussparung (18) zur Aufnahme des zumindest einen Schneidteils (20) aufweist.

6. Schneidplatte (30), die zumindest eine geometrisch bestimmte Schneide (36) eines Zerspanungswerkzeugs zum Zerspanen eines Werkstücks definiert,
**dadurch gekennzeichnet, dass**
die Schneidplatte (30) aus einem einkristallinen metallischen oder keramischen Schneidstoff besteht,
insbesondere aus einer einkristallinen Superlegierung oder einer einkristallinen Oxydkeramik.

7. Schneidplatte (10; 30) nach einem der Ansprüche 4 bis 6,
**dadurch gekennzeichnet, dass**
diese eine Wendeschneidplatte ist.

8. Zerspanungswerkzeug (50) mit einem Schneidteil (54) oder einer Schneidplatte (10; 30) nach einem der vorhergehenden Ansprüche.

9. Zerspanungswerkzeug (60) mit wenigstens einer geometrisch bestimmten Schneide (62) zum Zerspanen eines Werkstücks,
**dadurch gekennzeichnet, dass**
das Zerspanungswerkzeug (60) aus einem einkristallinen metallischen Schneidstoff besteht, insbesondere aus einer einkristallinen Superlegierung.

10. Verwendung eines einkristallinen metallischen oder keramischen Werkstoffs als Schneidstoff für ein Zerspanungswerkzeug (50; 60) mit geometrisch bestimmter Schneide.
